# EUROPEAN PATENT APPLICATION

(11) **EP 2 503 147 A1**
(43) Date of publication of application: **26.09.2012**
(21) Application number: 10831172.1
(22) Date of filing: 18.11.2010
(51) Int. Cl.: F03D 9/00, F03D 11/00

(54) **DIRECTLY ACTUATED POWER TRAIN FOR A WIND TURBINE**

(30) Priority: 20.11.2009 ES 200902201
(71) Applicant: Gamesa Innovation & Technology, S.L., 31621 Sarriguren (Navarra) (ES)
(72) Inventor: STEFFENSEN, ULRIK, DK-8600 Silkeborg (DK)
(86) International application number: PCT/ES2010/000468
(87) International publication number: WO 2011/061363

(57) **Abstract**

Wind turbine comprising a tower (11), a supporting frame (13) mounted on the tower (11), a drive train including a permanent magnet generator (41) which is directly driven by a wind rotor (15), comprising a wind rotor hub (17) and at least one blade (18), through a generator shaft (43) rigidly connected to a main shaft (29); the wind rotor (15) and the generator (41) being located at opposite sides with respect to the tower (11); the generator (41) being supported by the generator shaft (43) by means of a bearing unit; the wind rotor hub (17) being supported by the supporting frame (13) through a main bearing (27) that do not allow the transmission of bending moments; the connections between the main bearing (27), the main shaft (29) and the generator shaft (43) being adapted to transmit the wind rotor torque to the generator shaft (43) without bending movements.

## Description

### FIELD OF THE INVENTION

This invention relates to a wind turbine and in particular to a wind turbine having a directly driven drive train.

### BACKGROUND

Wind turbines are devices that convert mechanical energy to electrical energy. A typical wind turbine includes a nacelle mounted on a tower housing a drive train for transmitting the rotation of a wind rotor to an electric generator and other components such as a yaw drive which rotates the wind turbine, several controllers and a brake. The wind rotor comprises a rotor hub supporting a number of blades extending radially therefrom for capturing the kinetic energy of the wind and causing the driving train rotational motion. The rotor blades have an aerodynamic shape such that when a wind blows across the surface of the blade, a lift force is generated causing the rotation of a shaft which is connected -directly or through a gearing arrangement- to the electrical generator. The amount of energy produced by wind turbines is dependent on the rotor blade sweeping surface that receives the action from the wind and consequently increasing the length of the blades leads normally to an increase of the power output of the wind turbine.

Three basic drive train concepts for wind turbines without gearbox are known in the art.

In a first basic concept the generator is positioned in-between the rotor and the mainframe. One of its problems is that the air-gap between the generator rotor and the generator stator will be influenced by the loads on the rotor. Rotor tilt and yaw moments will cause the main shaft to deflect and this will move the generator rotor closer to the generator stator.

In a second basic concept the generator is positioned in front of the rotor. The air-gap between the generator rotor and the generator stator is then less influenced by the loads on the rotor due to the fact that both generator stator and generator rotor moves together with deflections of the main shaft. But the internal play in the main bearings will still cause variations in the air-gap due to the rotor loads.

In a third basic concept the generator is placed behind the tower and connected to the turbine rotor by a main shaft. A problem involved in this concept is that the main shaft may bend under high rotor loads causing variations in the air-gap in-between generator rotor and generator stator. There are known various proposals addressing said problem.

In WO 01/94779 A1 it is disclosed a connecting arrangement between the rotor hub and the generator constituted by a two-part axle supported by two bearing units.

In WO 02/33254 A1 the connecting arrangement between the rotor hub and the generator is a main shaft supported by means of two bearings arranged on a base at the top of the tower. The generator deformations are avoided by means of a non-rotatable coupling between the generator stator and the wind turbine base.

In WO 2009/05664 the connecting arrangement between the rotor hub and the generator is a main shaft supported by means of two bearings arranged on a base at the top of the tower. The generator deformations are avoided by means coupling element between the generator housing and the wind turbine supporting frame.

The known proposals do not solve satisfactorily the problem of avoiding generator air-gap variations and this invention is intended to avoid that drawback.

### SUMMARY OF THE INVENTION

It is an object of the present invention to provide a wind turbine with a directly driven drive train, having the generator placed behind the tower and connected to the wind rotor by a main shaft, that keeps the air-gap between the generator rotor and the generator stator without significant variations.

It is another object of the present invention to provide a wind turbine with a directly driven drive train, having the generator placed behind the tower and connected to the wind rotor by a main shaft, that minimizes the weight of the rotor hub and the main bearing.

It is another object of the present invention to provide a wind turbine with a directly driven drive train, having the generator placed behind the tower and connected to the wind rotor by a main shaft, that minimizes the weight of the main shaft.

These and other objects are met by providing a wind turbine comprising a tower, a supporting frame mounted on the tower, a drive train including a permanent magnet generator which is directly driven by a wind rotor, comprising a wind rotor hub and at least one blade, through a generator shaft rigidly connected to a main shaft, the wind rotor and the generator being located at opposite sides with respect to the tower, the generator being supported by the generator shaft by means of a bearing unit, the wind rotor hub being supported by the supporting frame through a main bearing, preferably a double row taper roller bearing, that do not allow the transmission of bending moments; the connections between the main bearing, the main shaft and the generator shaft being adapted to transmit the wind rotor torque to the generator shaft without bending movements.

In a preferred embodiment, the generator bearing unit comprises two bearings, preferably single row taper roller bearings, and the main shaft is connected to said main bearing by a first coupling arrangement and to the generator shaft by a second coupling arrangement, both coupling arrangements being arranged for keeping aligned the main shaft and the generator shaft. Hereby it is achieved a wind turbine configuration that assure that there are not air-gap variations between the generator rotor and the generator stator.

In another preferred embodiment the generator bearing unit comprises one bearing, preferably an spherical bearing, and the main shaft is connected to said main bearing by a first coupling arrangement being arranged for keeping aligned the main shaft and the generator shaft. Hereby it is achieved a wind turbine having a simplified drive train configuration in which a little and limited air-gap variation between the generator rotor and the generator stator variation may take place.

Other features and advantages of the present invention will be understood from the following detailed description of an illustrative and by no means limiting embodiment of its object in relation with the enclosed drawing.

### BRIEF DESCRIPTION OF DRAWINGS

Figure 1 is section side view of a prior art wind turbine.
Figure 2 is a schematic side view of a first embodiment of a wind turbine drive train according to this invention.
Figure 3 is a schematic side view of a second embodiment of a wind turbine drive train according to this invention.

### DETAILED DESCRIPTION OF PREFERRED EMBODIMENTS

This invention refers to a directly driven drive train having the generator placed behind the tower, i.e. following the third basic concept mentioned on the background section, and for its better understanding we will briefly describe in the first place those features of the configuration disclosed in WO 2009/05664 that are present in the wind turbine according to the present invention.

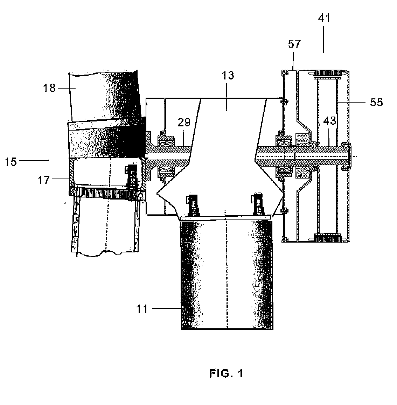

Following Figure 1 it can be seen that the configuration of the drive train is based on a main shaft 29 extending from the rotor hub 17 to a PM generator 41, across the tower 11.

The drive train comprises a rotating rotor hub 17 to which one or more blades 18 are attached, a main shaft 29 and a PM generator 41 comprising a generator rotor 55 and a generator stator 57.

The main shaft 29 is connected to the rotor hub 17 and to a generator shaft 43 for performing a direct transfer of the driving torque to the generator rotor 55.

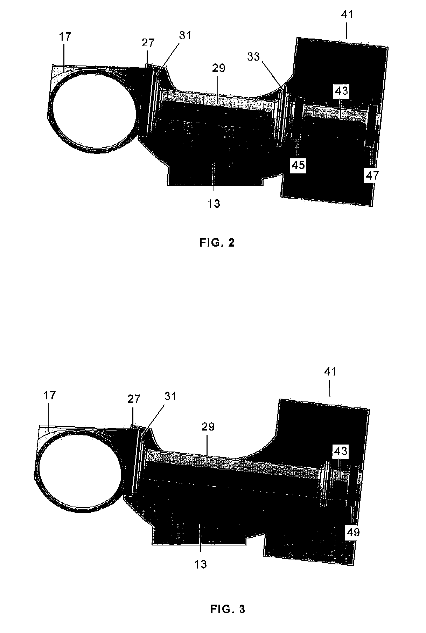

According to a first embodiment of this invention shown in Figure 2, highlighting the differences with respect to the prior art configuration, the generator 41 is connected to the rotor hub 17 through a main shaft 29 which is a pure torque shaft because the rotor hub 17 is attached to a main bearing 27, such as a double row tapered roller bearing, which is capable of supporting the moment loads from the wind rotor 15. Therefore the main bearing 27 do not allow the transmission of bending moments by the main shaft 29. The main bearing 27 is attached to the supporting frame 13.

On the other hand, the generator 41 is made as an independent unit with internal bearings 45, 47 that assure no variation of the air-gap between the generator rotor 55 and the generator stator 57.

Couplings 31, 33 are used in the connections between the main bearing 27 and the main shaft 29 and between the main shaft 29 and the generator shaft 43. These couplings 31, 33 account for misalignment between the main bearing 27 and the generator 41 mounting positions. They also account for angular deflections of the main bearing 27 due to moment loads.

In the second embodiment of this invention shown in Figure 3 highlighting the differences with respect to the prior art configuration, instead of using two bearings in the generator 41 only one spherical bearing 49 is used. This allows angular deflection of the generator rotor 55 and thereby it is only required to use one coupling 31 between the main bearing 27 and the main shaft 29. In this embodiment some little variation of the air gap between generator rotor 55 and generator stator 57 may take place because the main shaft 29 can be subjected to some amount of moment loading and the spherical bearing 49 can cause some variation of the air gap, although due to the length of the main shaft 29 this variation will be minimal.

Among the advantages of the invention, one can found the following.
- The dimensions of the rotor hub 17 and the main bearing 27 can be optimized according to the rotor loads (no shaft is going between them). The weight of the rotor hub 17 and the main bearing 27 is therefore kept low which also affects the rest of the wind turbine structure. The overall cost of the turbine is thereby minimized.
- The main shaft 29 does not need to be dimensioned for moment loads, only for torque loads. The weight and cost of the main shaft 29 is thereby minimized.

Although the present invention has been fully described in connection with preferred embodiments, it is evident that modifications may be introduced within the scope thereof, not considering this as limited by these embodiments, but by the contents of the following claims.

## Claims

1. Wind turbine comprising a tower (11), a supporting frame (13) mounted on the tower (11), a drive train including a permanent magnet generator (41) which is directly driven by a wind rotor (15), comprising a wind rotor hub (17) and at least one blade (18), through a generator shaft (43) rigidly connected to a main shaft (29), the wind rotor (15) and the generator (41) being located at opposite sides with respect to the tower (11), the generator (41) being supported by the generator shaft (43) by means of a bearing unit, **characterized in that**:
a) the wind rotor hub (17) is supported by the supporting frame (13) through a main bearing (27) that do not allow the transmission of bending moments;
b) the connections between the main bearing (27), the main shaft (29) and the generator shaft (43) are adapted to transmit the wind rotor torque to the generator shaft (43) without bending movements.

2. Wind power turbine according to claim 1, **characterized in that** the main bearing (27) is a double row taper roller bearing.

3. Wind power turbine according to any of claims 1-2, **characterized in that** the generator bearing unit comprises two bearings (45, 47) and **in that** the main shaft (29) is connected to said main bearing (27) by a first coupling arrangement (31) and to the generator shaft (43) by a second coupling arrangement (33), both coupling arrangements (31, 33) being arranged for keeping aligned the main shaft (29) and the generator shaft (43).

4. Wind power turbine according to claim 3, **characterized in that** said bearings (45, 47) are single row taper roller bearings.

5. Wind power turbine according to any of claims 1-2, **characterized in that** the generator bearing unit comprises one bearing (49) and **in that** the main shaft (29) is connected to said main bearing (27) by a first coupling arrangement (31) being arranged for keeping aligned the main shaft (29) and the generator shaft (43).

6. Wind power turbine according to claim 5, **characterized in that** said bearing (49) is a spherical bearing.
